# EUROPEAN PATENT SPECIFICATION

(11) **EP 0 662 771 B1**
(45) Date of publication and mention of the grant of the patent: **26.01.2000**
(21) Application number: 94309601.6
(22) Date of filing: 21.12.1994
(51) Int. Cl.: H04N 7/16, H04N 7/58

(54) **Transmission and reception of program information**
Sendung und Empfang von Programminformation
Transmission et réception d'information de programmes

(30) Priority: 05.01.1994 GB 9400101; 26.05.1994 US 249915
(43) Date of publication of application: 12.07.1995
(73) Proprietor: THOMSON CONSUMER ELECTRONICS, INC., Indianapolis, IN 46290-1024 (US)
(72) Inventor: Chaney, John William, Noblesville, Indiana 46060 (US); Bridgewater, Kevin Elliott, Indianapolis, Indiana 46229 (US)
(74) Representative: Ruellan-Lemonnier, Brigitte

(56) References cited:
- US-A- 4 264 925
- 18TH INTERNATIONAL TELEVISION SYMPOSIUM AND TECHNICAL EXHIBITION, 15 June 1993, MONTREUX, SWITZERLAND pages 458 - 462 BOYER 'DIGITAL BROADCAST SATELLITE SYSTEM'
- 42ND ANNUAL CONVENTION AND EXPOSITION OF THE NATIONAL CABLE TELEVISION ASSOCIATION, 9 June 1993, SAN FRANCISCO, CALIFORNIA pages 223 - 236 BESTLER 'FLEXIBLE DATA STRUCTURES AND INTERFACE RITUALS FOR RAPID DEVELOPMENT OF OSD APPLICATIONS'
- 42ND ANNUAL CONVENTION AND EXPOSITION OF THE NATIONAL CABLE TELEVISION ASSOCIATION, 9 June 1993, SAN FRANCISCO, CALIFORNIA pages 185 - 191 COX ET AL. 'EXTENDED SERVICES IN A DIGITAL COMPRESSED SYSTEM'
- 42ND ANNUAL CONVENTION AND EXPOSITION OF THE NATIONAL CABLE TELEVISION ASSOCIATION, 9 June 1993, SAN FRANCISCO, CALIFORNIA pages 82 - 89 DAILY 'ADDRESSABLE DECODER WITH DOWNLOADABLE OPERATION'

## Description

This invention relates to the formation, transmission and reception of a television program guide as for a broadcast television service.

A direct broadcast satellite system has been proposed which will transmit compressed television and other ancillary signals in compressed and packeted form. The system has a potential of transmitting hundreds of programs. Each program may include a number of services. A service is defined herein as a program component, such as a video signal, or an audio signal, or a closed caption signal, or data, etc. The data may include executable computer files or programs for use by appropriate receivers. Each service of each program is identified by a unique service identifier (SCID). Thus if a program includes four service components, the program will be assigned four SCIDs. The information for respective services will be transmitted in packets of predetermined amounts of data (for example 130 bytes) and each packet of information will include a SCID corresponding to the service.

A plurality of programs, for example six to eight, may be transmitted in time division multiplexed form (on a packet basis) on a single carrier frequency. To provide, e.g. 160 programs, the system will transmit on 20 to 28 carriers.

In order to receive a particular program, a receiver is tuned to a particular carrier, and programmed to select signal packets associated with the program. Information associating the service components (SCIDs) with a particular program are contained in a program guide, which is itself a program that is transmitted. Because of the large number of programs and the consequential larger number of services, the programming information associating programs with services is ever changing, and must be continually updated.

The program guide includes information to be used by respective receivers to associate transmitted time division multiplexed service packets with programs desired to be viewed. The program guide is a program which is assigned a particular SCID that a receiver will automatically select on start up, and load the program data in memory. The receiver will include a microprocessor, which is responsive to programming commands, to scan the stored program guide and determine the carrier on which a desired program is transmitted and the associated SCIDs of the program's service components. Thereafter the tuner within the receiver will be tuned to the appropriate carrier frequency and packet selection apparatus will route the selected service component packets to corresponding signal processing apparatus.

The program guide information that has been discussed thus far is only machine usable, that is, the SCID information is useful to receiver apparatus but not of interest to the user. Information of interest to the respective user is the schedule of programs, the times of broadcast, the cost of pay per view programs, what movies or sporting events will be shown, etc. All of this data may also be included in the program guide and arranged in a form conducive to display and perusal. The display and perusal may be performed by conventional menu programming using the receiver On Screen Display apparatus.

The amount of program guide information for a month, for example, is enormous and places constraints on how, when and where it is transmitted and how, when and by what it is processed in respective receivers. One transmission parameter of paramount importance, which is impacted by the program guide is signal bandwidth. One receiver parameter of paramount importance is cost. The requisite use of program guide information should not significantly impact on either system bandwidth or receiver cost. In addition, the program guide should be available to the user with minimal delay.

The present invention provides a method and apparatus for transmitting program guides as defined in claims 1, 2, 4 and 5 and an apparatus and method for receiving such guides as defined in claims 7 and 14.

Program guide information is formed as a master guide and a special guide. The master guide contains programming information for the period of the current several hours. The special guide contains programming information for an extended period of days, for example. The master guide is sent as a service on substantially every carrier or transponder to render it readily available to respective users regardless of the carrier frequency to which the user's receiver is tuned. The special guide is transmitted on only one of the carriers (transponders) to minimize use of system bandwidth. (In actuality, the special guide is a plurality of special guide segments, each of which is transmitted on only one transponder.)

A receiver embodiment, which tends to minimize the amount of memory required of a receiver, is an arrangement which utilizes the video decompression apparatus to treat program guide data as compressed video information and load same in the video decompressor memory. A µPC/decompressor interface is included to allow the receiver µPC to scan the program data in the video decompressor memory. This arrangement minimizes the memory (other than video decompressor memory) that would otherwise be required by the µPC to display or process the special program guide. The video decompression apparatus normally accepts data at a relatively fast rate. The large amount of special program guide data can therefore be relatively rapidly downloaded into memory for use with minimal latency.

### BRIEF DESCRIPTION OF THE DRAWINGS

The invention will be described with reference to the attached FIGURES wherein:
FIGURE 1 is a pictorial diagram of a satellite transmission system;
FIGURE 2 is a block diagram of one of the transmit elements illustrated in FIGURE 1;
FIGURE 3 is a pictorial diagram describing the general format of signal packets in which program component service data is transmitted;
FIGURE 4 is a block diagram of a portion of a receiver apparatus embodying the present invention; and
FIGURE 5 is a block diagram showing the interfacing between the µPC and the video decompression apparatus of FIGURE 4.

The present invention will be described in the environment of a direct broadcast satellite system, DBS; however, it will readily be appreciated that its use is not limited to this environment. The invention is at least applicable in general to a broad range of time division multiplexed television broadcast systems such as packet cable and high definition television systems for example.

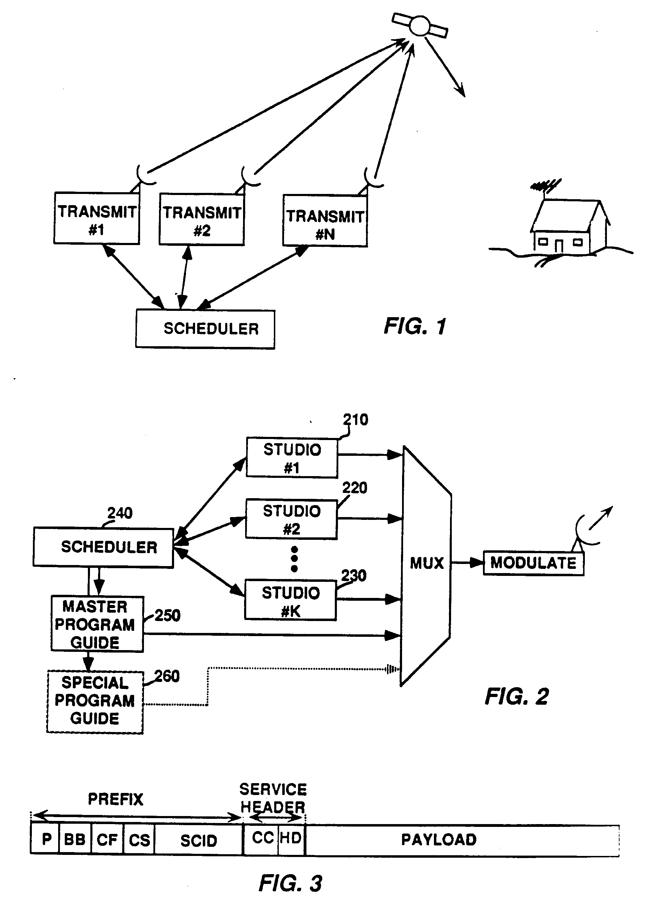

Referring to FIGURE 1, a DBS system includes a satellite containing a number of transponders. Respective transponders relay information between an earth bound transmitter and an earth bound receiver (e.g. in a home). Each transponder responds to signal transmitted on an exclusive carrier frequency.

The system may include a plurality of transmitters, (transmitters #1 to N) one for each transponder. The transmitters respectively transmit different program material such that the combination of transmitters provide a wide variety of television viewing material. The system includes a scheduler to coordinate program material amongst the respective transmitters.

FIGURE 2 illustrates an exemplary transmitter of FIGURE 1. In the present exemplary system, each transmitter is shown as a plurality of program generating organizations and/or equipment. These organizations/equipment are illustrated as studios 210, 220, 230, (STUDIOS 1 to K) each of which is capable of providing a packet audio/video/ data (AVD) program. (United States Patent 5,168,356 by Acampora et al. describes apparatus for generating packet audio/video programs.) The respective audio or video or data component of each program is a packet signal identified with an exclusive service channel identifier, SCID. Packets of the respective component packet signals are time division multiplexed in a program multiplexer (not shown) to form the respective AVD signal provided by one of the studios. The packet programs provided by the studios are time division multiplexed in a channel multiplexer (MUX). The output of the channel multiplexer is then modulated on an assigned transponder carrier frequency. The program multiplexing apparatus and/or the modulator may include forward error correction, FEC, apparatus for generating error parity bytes and interleaving of portions of the signal to effect a degree of error immunity during the transmission process.

The scheduler 240 of FIGURE 2, which corresponds to the scheduler of FIGURE 1, is an information management system including human intervention. The scheduler may include the system business office. The scheduler assigns programs to transponders, assigns SCIDs to program components, and also generates packet program guides. The scheduler maintains a running data base of all system programming for an extended period of time. The SCIDs of respective programs are associated with program names. In addition, the respective program names are associated with reception times and may be tagged with "type" codes for search purposes. For example, movies may be tagged with a movie code, sports programs with a sports code, soap operas with a soap code, horse operas with another code, etc. In addition, the respective program types may be categorized into subsets of the primary types such as movies being classified as thrillers, horror, comedies, etc., and the sports category classified into professional and amateur, for example.

An example of the types of information that may be maintained in respective records of the scheduler data base is shown in TABLE I. The exemplary record shown is for the 2-hour movie, Bambi, to be aired 27 April 1994 at 7:30 PM. The database may also include common system messages to be transmitted to current subscribers.

**TABLE I**

| No. | ITEM | DESCRIPTION |
|---|---|---|
| 1 | year | 1994 |
| 2 | month | 04 |
| 3 | date | 27 Wed. |
| 4 | times | start 7:30P; end 9:30P |
| 5 | channel | SHO |
| 6 | PPV | yes/no |
| 7 | closed cap. | yes/no |
| 8 | provider | studio xyz |
| 9 | SCIDs | video-xxx..xx; audio-xxx..xx; data-xxx..xx; etc. |
| 10 | prog. name | BAMBI |
| 11 | description | Disney movie released year.........etc. |
| 12 | class | (**audio**/**video**/data) |
| 13 | subclass 1 | movie |
| 14 | subclass 2 | (rating) |
| 15 | subclass 3 | (**children**/western/SciFi/romance/nature/.etc.) |
| 16 | billing info | ??? |

The scheduler scans the data base periodically and generates a master program guide 250. This master program guide is an arrangement of a simplified portion of the programming information relevant to programs which will be transmitted within the subsequent few hours. Items from the data base which may be included in the master guide are items 4 through 15 for the current day spanning a period of several hours and including all programs in progress. The arrangement is in a data file format which comports with receiver microprocessor (µPC) programming to condition the data for display as a menu programming guide, and to identify service component packets of programs selected for viewing.

Even though the data will, in part, be displayed on the television screen, it is not in compressed video format, because text is not particularly conducive to MPEG compression, and text in MPEG compressed form is not conducive to µPC manipulation. The master program guide is a data file which is packeted in a similar manner as the other program service components and assigned a specific predetermined SCID such as 000000000001.

FIGURE 3 illustrates an exemplary packet format. Each packet includes a prefix which is of the same form for all service types. The prefix includes a one bit priority field P; a one bit boundary field BB, which indicates boundaries between significant signal changes; a one bit field, CF, which indicates if the payload is scrambled; a one bit field, CS, which indicates the one of two scramble keys that is to be used to unscramble a payload; and a twelve bit SCID. Following the prefix is a service header which is service specific. The service header includes a four bit continuity count value CC. The continuity count is service specific, with the count value in successive packets being successively incremented by one unit, modulo 16. For a video service the count values are followed by a four bit field, HD, which indicate certain payload options. The remainder of the packet is the signal payload. The packet may include error code parity bits appended to the end of the payload. Such error coding may be performed over the entire packet, or only over portions thereof.

The master program guide is sent in packet form to each of the transmitters wherein it is time division multiplexed with the respective program packets by the channel multiplexer if there is sufficient bandwidth. In scheduling the respective transponders, the scheduler attempts to reserve space for the program guide on each transponder, so that substantially every system transponder conveys the master program guide. Since the master program guide is transmitted on substantially all transponders, no matter to which transponder a receiver is tuned, the user can immediately switch to the master program guide to review available programming.

The master program guide is repeatedly sent and is updated regularly, for example every 30 minutes. The repetition rate is relatively frequent, the goal being that a subscriber turning on his receiver can access a programming menu substantially immediately. This is possible because the amount of data contained in the master guide is relatively limited.

A much more comprehensive program guide, termed a special guide 260, is also formed by the scheduler, and includes all programming information for a period of the following thirty days, for example. This is a significant amount of data, but the system designers had decided it would benefit subscribers to be able to schedule their viewing over longer periods (weeks or a month). The special program guide is a packet data program that is applied to only one of the transmitters and thus is available on only one of the transponders, albeit that the particular transponder may change day to day or hour to hour in accordance with transmitter bandwidth availability and other scheduling requirements. The SCID of the special guide is variable and is assigned by the scheduler. The location of the special guide is listed in the master guide along with other programming.

In a preferred embodiment, the master guide is formed as four sequential blocks of data designated;
SEGM : APGD : CSSM1...CSSMnseg : PISM1....PISMnseg.
The special guide on the other hand is partitioned into a plurality of segments (from 1 to 16) with an index "nseg" indicating the current number of segments comprising the special guide. Each segment carries program information for one or more channels, which range from 100 to 999 and each segment includes two sequential blocks of data;
CSSM1...CSSMnseg : PISM1....PISMnseg.

The CSSM block is a channel to service_id segment map. This includes data describing channels (channel name, call letters, channel number, type,...) which are in the corresponding segment. The PISM block contains linked lists of program information (title, start time, duration, rating, category,...) that are on each channel described in the corresponding CSSM.

The SEGM block contained in the master guide includes information about the partitioning of the channel space into segments and the number of segments. The SEGM data block is thus a segment map into the special guide. The block APGD contains a program guide map which indicates which special guide segments are active and their location (i.e., the particular transponder carrying the segment) as well as the SCIDs of respective segments. The APGD also contains program information relating to ratings and theme, such as items 10-15 in the above data base record.

The time span of the programming data included in the master guide is determined by the amount of memory available for processing the guide in the receiver. The exemplary system described allows for a master guide of 242 packets of 127 bytes each of data. Current data for all channels is included in the master guide, and as much future programming data as will fit within the 30Kbytes of master guide space. This results in approximately two hours of program data.

Special guides are not limited by memory constraints, but rather by bandwidth. To minimize bandwidth demands upon the system by the special guide, the special guide segments are arbitrarily limited to 750 packets of 127 bytes, or approximately 95Kbytes per segment and a total of 1.5Mbytes for all 16 segments.

Each special guide segment is assigned a different SCID, and different ones of the segments may be transmitted on different transponders so that special guide data is substantially evenly distributed amongst all of the transponders.

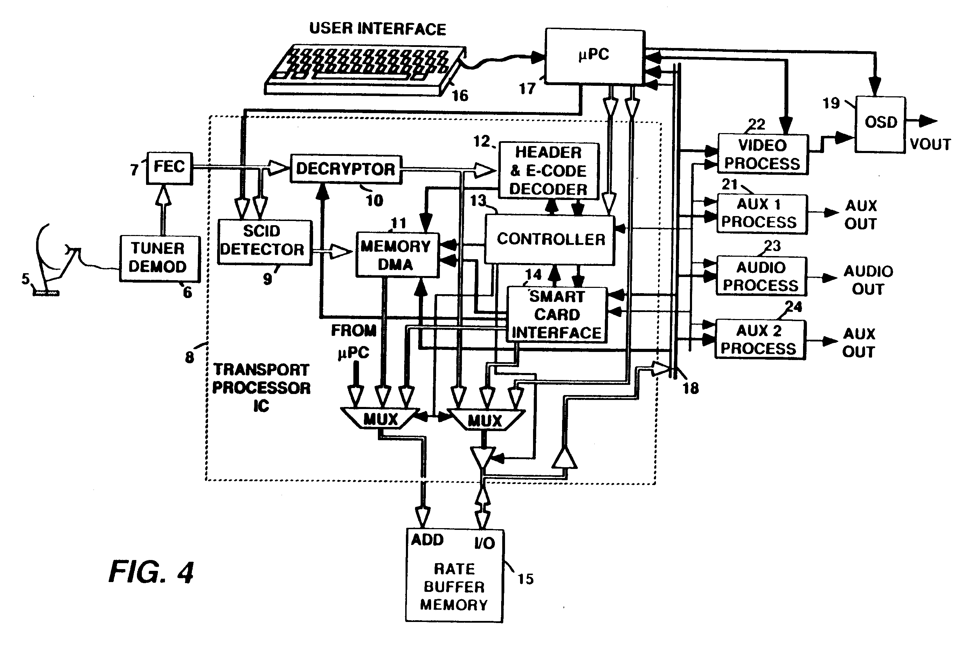

FIGURE 4 illustrates in block form, a portion of an exemplary AVD receiver. Transmitted AVD signal is captured by an antenna 5 and coupled to a tuner-demodulator 6. The tuner is controlled by the µPC to select a desired transponder carrier frequency. The selected carrier is demodulated and the modulating signal is output from the tuner-demodulator 6 in binary form. The modulating signal is applied to a forward error correcting circuit, FEC, 7, which corrects correctable errors and generates an error signal for respective signal packets which contain non-correctable errors. The FEC provides a time division multiplexed packet signal including a plurality of programs one of which is the master program guide.

The packet stream from the FEC is applied to a transport processor 8. The transport processor includes circuit elements for selecting ones of packets from the multiplexed packet stream, decrypting (descrambling) appropriate packets, and separating the service payloads from selected packets. In the transport processor, the packet stream from the FEC is applied to a decryptor 10 and to an SCID detector 9. At system start up, the system controller or µPC 17 is programmed to condition the SCID detector to detect occurrences of packets containing the master guide SCID. On detection of master guide packets, the SCID detector 9, conditions the memory DMA circuitry 11 to store the master guide packet payloads in a predetermined block of a rate buffer memory 15. The µPC, responsive to user commands input via a user interface 16, scans this block of memory for program data to determine the SCIDs associated with program components of the program which the user wishes to view. These SCIDs are applied to the SCID detector 9 to condition it to select the desired program service components. The memory DMA 11, in cooperation with the transport controller 13 and the µPC assigns respective blocks of the rate buffer memory 15 to respective service components associated with the selected SCIDs. As packets which contain the selected SCIDs are detected, the DMA 11, loads their payloads in the corresponding memory blocks. As respective service component processors 21-24 need data, they request it of DMA 11 through the transport controller 13. Controller 13 arbitrates memory access contention between read and write demands of the various elements according to a predetermined priority to satisfy all elements. Blocks of the memory 15 that are assigned for storage of particular service components, such as video and audio, are in effect conditioned to operate as first-in-first-out memories (FIFOS), each with a storage capacity of several packet payloads.

In this example, the transport processor includes a header and error code decoder 12 which is a dual purpose matched filter. In one mode it determines which of packets of entitlement data a particular subscriber is entitled to accept. In a second mode it is programmed to search for particular start codes in payloads of video service data. Detection of the desired parameters in either mode condition the memory addressing circuitry to either reset or not reset particular memory address pointers. The transport processor also includes a smart card interface 14. The smart card interface interfaces a smart card with the receiver system. The smart card contains a processor which controls access to particular programs, maintains billing information, and in conjunction with a modem communicates with service providers. The smart card utilizes the entitlement data mentioned above. Neither the smart card interface 14 or the decoder 12 are particularly relevant to the invention, except for the fact that the smart card requires memory.

As mentioned previously, it is a design objective to produce receiver apparatus at relatively low cost. To do so the receiver memory has been minimized. This is accomplished, at least in part, by multiplexing a single memory for a plurality of uses. This memory, the rate buffer memory 15, is multiplexed between operating as a compressed video rate buffer, a compressed audio rate buffer, master guide storage, smart card memory, µPC working memory and µPC storage. Even with all of these uses the memory 15 can be kept to 256K bytes. This is only possible because the program guide is split between the master and special guides. The master guide data is relatively small and hence consumes little memory space. The entirety of the memory 15 is not large enough to contain the special guide.

The master guide, once received is retained in the rate buffer memory, albeit it is periodically updated. Master guide retention allows instantaneous channel changes because the associated SCIDs are always available. If the master guide were dropped after each channel selection, a delay would be incurred between channel selections while the master guide was reloaded.

During intervals that the special guide is to be processed, scanned, and/or manipulated, no other services will be processed, hence the entire buffer memory 15 is available for processing the special guide. Since the memory is not large enough to contain the entire special guide at one time, processing of parts of the special guide would either have to be done iteratively or else the memory would have to be expanded. The former would entail too long a process to be favorably accepted by consumers and the latter would undesirably increase the cost of the apparatus.

Both of the foregoing problems regarding the special guide are circumvented by appropriating use of video decompression memory for processing the program guide. Video decompression requires a relatively large dedicated memory. The memory requirements for decompression of MPEG coded signal are one frame of video display memory, two frames of storage for predicting bidirectionally coded or B frames, and further working storage for reformatting data applied to the decompressor. For decompressing 4x3 aspect ratio NTSC resolution images the required memory is about 16 Mbits. In FIGURE 4 this memory is subsumed within the video processor 22, is large enough to accommodate the special guide, and is not otherwise used when the special guide is processed.

During intervals when it is desired to use the special guide, the SCID detector is conditioned to select special guide packets and store their payloads in the buffer memory 15 as though it were compressed video data. The video processor is conditioned by the µPC to request data from the buffer memory block allotted the special guide SCID. This data is written to the video processor memory as if it were compressed video data. In this mode, the video channel is given priority, thus the special guide data is stored as fast as it arrives and may be loaded relatively rapidly.

When the special guide is transmitted as segments multiplexed amongst all channels, the microprocessor 17 must access the master guide in the buffer memory 15 and scan the segment map and APGD data block to determine channels and SCIDs of the respective segments. The microprocessor 17 is programmed to tune to the requisite channels containing the desired special guide segments and to condition the SCID detector to select the corresponding packets. Preferably all segments on a channel will be extracted before tuning another channel. It is also preferred that the respective channels be tuned in ascending or descending order to minimize resynchronization time between channels.

A µPC interface is incorporated in the video processor 22 to permit reading data from the video processor memory by the µPC. The µPC contains programs (e.g. search routines with information filters of known type) to permit the viewer to conveniently manipulate the special guide data. Since all of the special guide data is concurrently available, manipulation of the data may be accomplished as fast as the viewer can change commands. Since no extra memory is included to accommodate the special guide, costs are accordingly contained.

The manipulation of the special guide requires display of portions of the guide. The special guide data is transmitted in a data format not as compressed or non-compressed video signal. To display special guide information, the µPC selects the information for display and applies this data to an on screen display device (OSD) 19. When the program guide is being manipulated the OSD will monopolize the entire screen for the display of special guide text or other data and/or program command structure. At other times, when video is being decompressed, the OSD operates in conventional fashion to overlay desired text material on video images.

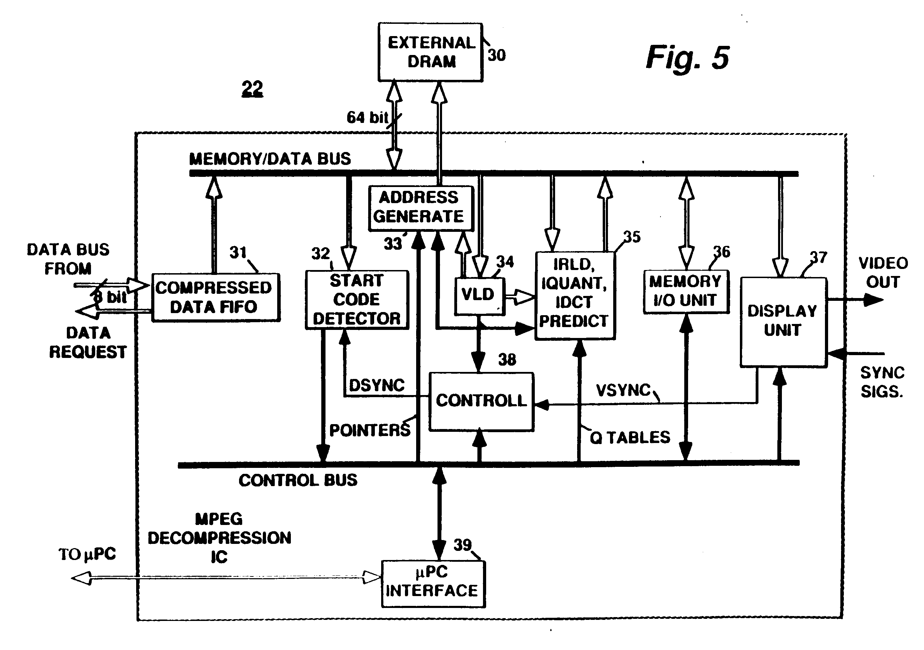

FIGURE 5 illustrates an exemplary video processor 22 with a µPC interface to allow reading of data stored in the processor memory. All of the decompression memory is subsumed in a single memory 30 which is distinct from the buffer memory 15.

The video decompressor includes a FIFO 31, which has a data input bus coupled to the data output bus of the buffer memory 15 and a data request bus connected to the transport processor controller and a data output bus coupled to an internal memory/data bus. During video decompression operation the FIFO 31 requests data of the memory 15 as required for decompression. FIFO 31 accepts data as 8-bit bytes and applies 64-bit words to the memory/data bus. As these 64-bit words are created they are loaded into the external DRAM 30 at addresses provided by the address generator 33. Data is also read from the DRAM 30 under the control of the address generator 33 as required by the respective circuit apparatus within the decompression IC. In effect the address generator 33 is a state machine, responsive to stimuli provided by the respective decompression circuits, and programmed to write and read video data to and from memory according to a predetermined set of decompression stimuli vectors.

The decompression IC includes a start code detector 32 a variable length decoder, 34 and an element 35 which includes an inverse run length decoder IRLD, an inverse quantizer, IQUANT, an inverse discreet cosine transformer, IDCT, and a predictor, PREDICT. Data from the memory is shuttled to and from and between various ones of these functional elements, in a known manner, to decompress the compressed MPEG video data. The operations of the respective decompression functions is coordinated by a controller 38, which in large part is also a state machine. The controller 38 is responsive to stimuli produced by various of the decompression elements and data received from the memory/data bus via a memory I/O unit 36. Compressed video data is in 4:2:0 format, thus raw decompressed video data is provided in 4:2:0 format. This raw decompressed video data is applied to a display unit 37, which interpolates the raw video to provide a video output in 4:2:2 format. Decompression circuitry of this general form is currently available from different vendors and is not the object of this invention.

A control bus interconnects the controller 38 with all of the decompressor functional elements including the memory I/O unit 36. A µPC interface is also connected to the control bus, which provides a means of communication with a µPC external to the decompressor IC. It is anticipated that some level of interactivity will be incorporated into the transmission service, and at times this interactivity may not involve video. In these instances it may be desired to inhibit any operation of the decompressor IC, or condition it to provide a predetermined static display for example. These and other functions may be programmed into the controller and triggered by the µPC via the µPC interface 39.

To write special guide data to the DRAM 30 all that is required is that the decompression IC be instructed that the SCID associated with the special guide represents a video service. The decompression IC will accept the special guide data as if it were compressed video and write it to the DRAM. Normal decompression processing must be suspended to preclude decompression operations redistributing the stored special guide information within the DRAM. Decompression suspension is effected by the µPC when the special guide SCID is associated with the video decompressor.

Reading of special guide data from the DRAM 30 involves suspending normal operation of the controller 38 via the µPC interface 39, and accessing the DRAM 30 via the address generator 33 and the memory I/O 36. One of the normal functions of the controller 38 is to apply memory address start pointers to the memory address generator, to access specific compressed data in the DRAM, which compressed data establishes the parameters by which decompression should be performed. This same facility may be utilized for accessing the DRAM 30 to read special guide data. That is, the controller is arranged to accept address pointers from the µPC and apply same to the address generator. In this manner specific memory locations of the DRAM may be addressed by the µPC. Data read from the DRAM 30 is coupled to the control bus via the memory I/O, which converts 64-bit memory output words to e.g., 8-bit bytes. The respective 8-bit bytes are thereafter transferred via the µPC interface 39 to the µPC 17 wherein they may be used as menu program data or applied to the rate buffer memory 15 for subsequent use. During reading of the special guide data from DRAM, the normal operation of elements 32, 34, 35 and 36 may be suspended by the controller 38 responsive to µPC commands provided by the µPC interface 39.

The expanded capability of the overall system, that is, use of the dedicated video compressor memory for receiving and storing the special program guide, is effected with substantially no additional hardware. All that is required is a slight change in the programming of the controller 38 to accept read address pointers from the µPC interface, and an ability to suspend normal operations of ones of the decompression functions, changes that one skilled in the video decompression circuits art can readily make to his specific hardware/software embodiments.

## Claims

1. A method of transmitting program information on a system including a plurality of transmission channels characterized by:
forming a master guide containing program information for a period of several hours of current programming information;
forming a special guide containing program information for a period of at least several days;
multiplexing said master guide with program signals on multiple ones of said plurality of transmission channels;
multiplexing said special guide on only one of said plurality of transmission channels along with said master guide and said program signals.

2. A method of transmitting program information on a system including a plurality of transmission channels characterized by:
forming a master guide containing program information for a period of several hours of current programming information;
forming a special guide containing program information for a period of at least several days;
multiplexing said master guide with program signals on multiple ones of said plurality of transmission channels;
forming said special guide in a plurality of segments; and
multiplexing respective segments on a plurality of transmission channels wherein respective segments are applied to different ones of said plurality of transmission channels.

3. The method of claim 2, characterized in that the steps of forming master and special guides, comprises:
providing respective audio and video program identifiers (SCIDs) for respective program components;
providing compressed audio and video program components, segmenting such components into payloads and forming respective component packets including a payload and a corresponding identifier (SCID);
forming a database including program information for an extended period of days, said database including program names, component identifiers (SCIDs), program times and channel information;
segmenting at least part of the information in said database into said special guide of program information, and forming said segments of said special guide into packets of special guide program information with an associated identifier (SCID);
forming a table of information identifying said special guide packets and associated identifiers (SCIDs);
forming a master guide including said table and a portion of programming information included in said special guide and dividing said master guide into payloads;
forming master guide payloads into packets including master guide identifiers (SCIDs);
providing a plurality of transmission channels;
time division multiplexing packets of said master guide, packets of respective audio and video programs and packets of said special guide for transmission on said plurality of transmission channels whereby said master guide is duplicated on a majority of said plurality of transmission channels and respective segments of said special guide are applied to different ones of said plurality of transmission channels.

4. Apparatus for performing the method of claim 1, characterized by:
a plurality of transmitting channels;
a plurality of packet A/V program generators;
a scheduler for generating a list of said packet A/V programs including information relating to transmission times, program identifiers, and miscellaneous information related to respective packet A/V programs;
said scheduler being programmed to generate a master guide packet signal containing a portion of data from said list relevant to a current viewing period of several hours, and to generate a special guide packet signal containing a greater portion of data from said list relevant to a viewing period of at least several days;
and multiplexing means for multiplexing said master guide packet signal with respective said packet A/V programs on substantially every channel, and for multiplexing said special guide with A/V programs on only one of said channels.

5. Apparatus for performing the method of claim 2, characterized by:
a plurality of transmitting channels;
a plurality of packet A/V program generators;
a scheduler for generating a list of said packet A/V programs including information relating to transmission times, program identifiers, and miscellaneous information related to respective packet A/V programs;
said scheduler being programmed to generate a master guide packet signal containing a portion of data from said list relevant to a current viewing period of several hours, and to generate a special guide packet signal containing a greater portion of data from said list relevant to a viewing period of at least several days, said scheduler generates said special guide in segments of exclusive data, with each segment comprising a packet signal; and
multiplexing means for multiplexing said master guide packet signal with respective said packet A/V programs on substantially every channel, and for multiplexing respective segment packet signals of said special guide on different ones of said plurality of channels.

6. The apparatus set forth in claim 5, characterized in that said scheduler is further programmed to include information interrelating said respective segment packet signals of said special guide in said master guide packet signal.

7. Apparatus for receiving compressed audio/video (A/V) packet signals time division multiplexed with program guide information, said A/V signals transmitted in packet format with respective A/V components identified by respective identifiers (SCIDs), said program information being transmitted in a master guide packet signal, including limited viewing information relating to a viewing period of several hours and also transmitted in a special guide packet signal including information related to a viewing period of at least several days, said apparatus being characterized by:
a detector (6,7) for detecting transmitted said A/V packet signals with time division multiplexed program guide information;
a transport processor (8), coupled to said detector for selecting signal packets of desired A/V packet signals, master guide packet signals and special guide packet signals, said transport processor separating payload information from respective packets;
a video signal decompressor (22), coupled to said transport processor, for decompressing A/V program video signal components, said video signal decompressor including memory means (30) for use in decompressing compressed video signal, a memory interface (32,33) for writing compressed video payloads to said memory means, and a microprocessor interface (39) for communicating data to said decompressor and for accessing data from said memory means;
a microprocessor (17) for conditioning said transport processor to select A/V program signal packets to said video signal decompressor for decompression, and wherein said microprocessor is responsive to user control to condition said transport processor to select program guide signal packets and to condition said video decompressor to write program guide signal packet payloads in said memory means as compressed video.

8. The apparatus set forth in claim 7, characterized in that said apparatus further includes:
on-screen-display means; and
said microprocessor, responsive to user control, scans at least a portion of program guide information stored in said memory means and conditions said on-screen-display apparatus to display the scanned special guide information.

9. The apparatus set forth in claim 7, characterized in that said special guide packet signal is transmitted in segments, each segment being a packet signal with packets of different segments being identified with a different identifier (SCID) and with different segments being transmitted on different channels, and wherein said master guide signal includes information identifying and relating said respective segments, for application to said memory means.

10. The apparatus set forth in claim 7, characterized in that said microprocessor is programmed to condition said video signal decompressor to respond to microprocessor memory addresses when said memory means is storing special guide information.

11. The apparatus set forth in claim 10 characterized in that said video signal decompressor includes:
an address generator, responsive to pointers for generating addresses for application to said memory means;
means coupled between said microprocessor interface and said address generator for coupling pointers provided by said microprocessor to said address generator.

12. The apparatus set forth in claim 7 further characterized by:
a rate buffer; and
wherein said transport processor applies payloads of transport packets to said rate buffer, and payloads of transport packets are coupled from said rate buffer to said video signal decompressor.

13. The apparatus set forth in claim 12, characterized in that said master program guide payloads are stored and accessed by said microprocessor in said rate buffer, and only said special program guide payloads are applied to said memory means.

14. A method of operating receiver apparatus for receiving a signal including at least compressed video data, and program guide data transmitted as a master guide containing programming information for a current period of several hours and a special guide containing information for a period of at least several days, said receiver including a microprocessor controller, a rate buffer memory, a video decompressor and associated decompressor memory, said method being characterized by:
detecting transmitted signal including at least compressed video data, and program guide data;
selecting from said signal said master guide and applying said master guide to said rate buffer memory for storage and access by said microprocessor controller;
scanning said master guide stored in said rate buffer memory with said microprocessor controller for determining parameters of said special guide to enable selection of said special guide from said signal;
selecting said special guide and storing said special guide in said decompressor memory;
scanning said special guide stored in said decompressor memory with said microprocessor controller for determining future program viewing information.

## Patentansprüche

1. Verfahren zum Übertragen von Programminformationen über ein System mit mehreren Übertragungskanälen, gekennzeichnet durch:
Bilden eines Masterführers mit Programminformationen für einen Zeitraum von mehreren Stunden der laufenden Programmierinformationen,
Bilden eines speziellen Führers mit Programminformationen für einen Zeitraum von wenigstens mehreren Tagen,
Multiplexen des Masterführers mit Programmsignalen auf mehreren der Übertragungskanäle,
Multiplexen des speziellen Führers nur auf einem der mehreren Übertragungskanäle zusammen mit dem Masterführer und den Programmsignalen.

2. Verfahren zum Übertragen von Programminformationen auf einem System mit mehreren Übertragungskanälen, gekennzeichnet durch:
Bilden eines Masterführers mit Programminformationen für einen Zeitraum von mehreren Stunden der laufenden Programmierinformationen
Bilden eines speziellen Führers mit Programminformationen für einen Zeitraum von wenigstens mehreren Tagen,
Multiplexen des Masterführers mit Programmsignalen auf mehreren Übertragungskanälen,
Bilden des speziellen Führers in mehreren Segmenten und
Multiplexen der jeweiligen Segmente auf mehreren Übertragungskanälen, wobei jeweilige Segmente verschiedenen der mehreren Übertragungskanäle zugeführt werden.

3. Verfahren nach Anspruch 2, dadurch gekennzeichnet, daß die Schritte zum Bilden des Master- und des speziellen Führers folgende Schritte enthalten:
Bereitstellen jeweiliger Audio- und Video-Programmidentifizierer (SCIDs) für jeweilige Programmkomponenten,
Bereitstellen von komprimierten Audio- und Video-Programmkomponenten, Segmentieren derartiger Komponenten in Nutzsignale und Bilden jeweiliger Komponentenpakete mit einem Nutzsignal und einem zugehörigen Identifizierer (SCID),
Bilden einer Datenbank mit Programminformationen für einen erweiterten Zeitraum von Tagen, wobei die Datenbank Programmnamen, Komponenten-Identifizierer (SCIDs), Programmzeiten und Kanalinformationen enthält,
Segmentieren wenigstens eines Teiles der Informationen in der Datenbank in den speziellen Führer für Programminformationen und Bilden der Segmente des speziellen Führers in Pakete mit Programminformationen für den speziellen Führer mit einem zugehörigen Identifizierer (SCID),
Bilden einer Tabelle mit Informationen, die die Pakete des speziellen Führers und die zugehörigen Identifizierer (SCIDs) identifizieren,
Bilden eines Masterführers, enthaltend die Tabelle und einen Teil der Programmierinformationen in dem speziellen Führer und Aufteilen des Masterführers in Nutzsignale,
Bilden von Nutzsignalen des Masterführers in Pakete mit Masterführer-Identifizieren (SCIDs),
Bereitstellen mehrerer Übertragungskanäle,
Zeitmultiplexen der Pakete des Masterführers, von Paketen mit jeweiligen Audio- und Videoprogrammen und Paketen des speziellen Führers für die Übertragung auf den mehreren Übertragungskanälen, wodurch der Masterführer auf einer Mehrzahl der mehreren Übertragungskanäle vervielfältigt wird und jeweilige Segmente des speziellen Führers verschiedenen Kanälen der mehreren Übertragungskanäle zugeführt werden.

4. Vorrichtung zur Durchführung des Verfahrens nach Anspruch 1, gekennzeichnet durch:
mehrere Übertragungskanäle,
mehrere Generatoren für ein Paket-A/V-Programm,
einen Scheduler zum Erzeugen einer Liste der Paket-A/V-Programme mit Informationen für die Übertragungszeiten, Programmidentifizierer und verschiedenen Informationen für die jeweiligen Paket-A/V-Programme,
wobei der Scheduler so programmiert ist, daß er ein Signal für ein Masterführerpaket erzeugt, das einen Teil der Daten von der Liste enthält für den laufenden Betrachtungszeitraum von mehreren Stunden und ein Signal für Pakete mit dem speziellen Führer erzeugt, das einen größeren Teil der Daten aus der Liste für einen Betrachtungszeitraum von wenigstens mehreren Tagen enthält,
Multiplexmittel zum Multiplexen des Signals für die Masterführerpakete mit den jeweiligen Paket-A/V-Programmen auf nahezu jedem Kanal und zum Multiplexen des speziellen Führers mit A/V-Programmen nur auf einem der Kanäle.

5. Vorrichtung zur Durchführung des Verfahrens nach Anspruch 2, gekennzeichnet durch:
mehrere Übertragungskanäle,
mehrere Generatoren für Paket-A/V-Programme,
einen Scheduler zum Erzeugen einer Liste der Paket-A/V-Programme mit Informationen für Übertragungszeiten, Programmidentifizierer und verschiedene Informationen für jeweilige Paket-A/V-Programme,
wobei der Scheduler so programmiert ist, daß er ein Signal für Masterführerpakete erzeugt, das einen Teil der Daten aus der Liste für einen laufenden Betrachtungszeitraum von mehreren Stunden enthält, und ein Signal für Pakete für den speziellen Führer erzeugt, das einen größeren Teil der Daten von der Liste für einen Betrachtungszeitraum von wenigstens mehreren Tagen, und wobei der Scheduler den speziellen Führer in Segmenten von exklusiven Daten erzeugt und jedes Segment ein Paketsignal enthält, und
Multiplexmittel zum Multiplexen des Signals für das Masterführerpaket mit jeweiligen Paket-A/V-Programmen auf im wesentlichen jedem Kanal und zum Multiplexen jeweiliger Signale für Paketsegmente des speziellen Führers auf unterschiedlichen Kanälen der mehreren Kanäle.

6. Vorrichtung nach Anspruch 5, dadurch gekennzeichnet, daß der Scheduler außerdem so programmiert ist, Informationen zu enthalten, die die jeweiligen Signale für die Segmentpakete des speziellen Führers in dem Paketsignal für den Masterführer in Beziehung bringen.

7. Vorrichtung zum Empfangen von komprimierten Audio/Video (A/V)-Paketsignalen, die mit den Programmführerinformationen zeitlich gemultiplext sind, der A/V-Signale, die in einem Paketformat mit jeweiligen durch jeweilige Identifizierer (SCIDs) identifizierten A/V-Komponenten übertragen werden, wobei die Programminformationen in einem Masterführer-Paketsignal übertragen werden, das begrenzte Betrachtungsinformationen für einen Betrachtungszeitraum von mehreren Stunden enthält und ebenfalls in einem Paketsignal für einen speziellen Führer übertragen wird, das Informationen für einen Betrachtungszeitraum von wenigstens mehreren Tagen enthält, gekennzeichnet durch:
einen Detektor (6, 7) zum Detektieren der übertragenen A/V-Paketsignale mit zeitlich gemultiplexten Programmführerinformationen,
einen Transportprozessor (8), der mit dem Detektor verbunden ist und Signalpakete der gewünschten A/V-Paketsignale auswählt, Paketsignale für einen Masterführer und Paketsignale für den speziellen Führer auswählt, wobei der Transportprozessor Nutzsignalinformationen von den jeweiligen Paketen trennt,
einen Videosignal-Dekomprimierer (22), der mit dem Transportprozessor verbunden ist, zum Dekomprimieren der A/V-Programm-Videosignalkomponenten, wobei der Videosignal-Dekomprimierer Speichermittel (30) zur Dekomprimierung des komprimierten Videosignals enthält, eine Speicher-Schnittstelle (32, 33) zum Schreiben komprimierter Video-Nutzsignale in die Speichermittel und eine Mikroprozessor-Schnittstelle (39) zur Datenkommunikation mit dem Dekomprimierer und für den Zugriff auf Daten von den Speichermitteln,
einen Mikroprozessor (17), der bewirkt, daß der Transportprozessor A/V-Programm-Signalpakete für den Videosignal-Dekomprimierer für eine Dekomprimierung auswählt, wobei der Mikroprozessor auf eine Benutzersteuerung anspricht und den Transportprozessor veranlaßt, Programmführer-Signalpakete auszuwählen, und daß der Video-Dekomprimierer Programmführer-Signalpakete-Nutzsignale als ein komprimiertes Videosignal in die Speichermittel einschreibt.

8. Vorrichtung nach Anspruch 7, gekennzeichnet durch folgende Merkmale: Mittel zur Wiedergabe auf dem Bildschirm,
wobei der auf eine Benutzersteuerung ansprechende Mikroprozessor wenigstens einen Teil der in den Speichermitteln gespeicherten Programmführerinformationen abtastet und bewirkt, daß die Vorrichtung zur Wiedergabe auf dem Bildschirm die abgetasteten Informationen für den speziellen Führer darstellt.

9. Vorrichtung nach Anspruch 7, dadurch gekennzeichnet, daß die Signalpakete für den speziellen Führer in Segmenten übertragen werden, daß jedes Segment, das ein Paketsignal mit Paketen von verschiedenen Segmenten ist, mit einem anderen Identifizierer (SCID) identifiziert wird und mit verschiedenen Segmenten, die auf verschiedenen Kanälen übertragen werden, und wobei das Signal des Masterführers Informationen enthält, die die jeweiligen Segmente identifizieren und betreffen, für eine Anwendung in den Speichermitteln.

10. Vorrichtung nach Anspruch 7, dadurch gekennzeichnet, daß der Mikroprozessor so programmiert ist, daß der Videosignal-Dekomprimierer-Adressen zu dem Speicher des Mikroprozessors liefert, wenn die Speichermittel die Informationen für den speziellen Führer speichern.

11. Vorrichtung nach Anspruch 10, dadurch gekennzeichnet, daß der Videosignal-Dekomprimierer folgendes enthält:
einen Adressengenerator, der auf Zeiger anspricht und Adressen für die Speichermittel erzeugt,
Mittel zwischen der Mikroprozessor-Schnittstelle und dem Adressengenerator zum Zuführen der durch den Mikroprozessor gelieferten Zeiger zu dem Adressengenerator.

12. Vorrichtung nach Anspruch 7, gekennzeichnet durch:
einen Ratenpuffer,
wobei der Transportprozessor Nutzsignale der Transportpakete dem Ratenpuffer zuführt und Nutzsignale der Transportpakete von dem Ratenpuffer dem Videosignal-Dekomprimierer zugeführt werden.

13. Vorrichtung nach Anspruch 12, dadurch gekennzeichnet, daß die Nutzsignale des Master-Programmführers durch den Mikroprozessor in dem Ratenpuffer gespeichert und auf sie zugegriffen wird und nur die Nutzsignale des speziellen Programmführers den Speichermitteln zugeführt werden.

14. Verfahren zum Betreiben einer Empfängervorrichtung zum Empfangen eines Signals mit wenigstens komprimierten Videodaten und Programmführerdaten, die als ein Masterführer übertragen werden, der Programmierinformationen für einen laufenden Zeitraum von mehreren Stunden und einen speziellen Führer mit Informationen für einen Zeitraum von wenigstens mehreren Tagen enthält, wobei der Empfänger eine Mikroprozessor-Steuereinheit, einen Ratenpuffer-Speicher, einen Videokomprimierer und einen zugehörigen Dekomprimierer-Speicher enthält, gekennzeichnet durch:
Detektieren eines übertragenen Signals mit wenigstens komprimierten Videoda-ten und Programmführerdaten,
Auswählen des Masterführers aus dem Signal und Zuführen des Masterführers zu dem Raten-Puffer-Speicher für die Speicherung und den Zugriff durch die Mikroprozessor-Steuereinheit,
Abtasten des in dem Raten-Puffer-Speicher gespeicherten Masterführers mit der Mikroprozessor-Steuereinheit zum Ermitteln von Parametern des speziellen Führers, um eine Auswahl des speziellen Führers aus dem Signal zu ermöglichen,
Auswählen des speziellen Führers und Speichern des speziellen Führers in dem Dekomprimierer-Speicher,
Abtasten des in dem Dekomprimierer-Speicher gespeicherten speziellen Führers mit der Mikroprozessor-Steuereinheit zum Bestimmen der künftigen Informationen für die Programmbetrachtung.

## Revendications

1. Méthode de transmission d'informations de programmes dans un système comportant une pluralité de canaux de transmission, caractérisée par :
la formation d'un guide principal contenant des informations de programmes pour une période de plusieurs heures d'informations de programmation en cours ;
la formation d'un guide spécial contenant des informations de programmes pour une période d'au moins plusieurs jours ;
le multiplexage dudit guide principal avec des signaux de programmes sur des canaux multiples de ladite pluralité de canaux de transmission ;
le multiplexage dudit guide spécial sur un seul de ladite pluralité des canaux de transmission avec ledit guide principal et lesdits signaux de programmes.

2. Méthode de transmission d'informations de programmes sur un système comportant une pluralité de canaux de transmission, caractérisée par :
la formation d'un guide principal contenant des informations de programmes pour une période de plusieurs heures d'informations de programmation en cours ;
la formation d'un guide spécial contenant des informations de programmes pour une période d'au moins plusieurs jours ;
le multiplexage dudit guide principal avec des signaux de programmes sur des canaux multiples de ladite pluralité de canaux de transmission ;
la formation dudit guide spécial dans une pluralité de segments ; et
le multiplexage de segments respectifs sur une pluralité de canaux de transmission où les segments respectifs sont appliqués à des canaux différents de ladite pluralité de canaux de transmission.

3. Méthode selon la revendication 2, caractérisée en ce que les étapes de formation des guides principal et spécial comprennent :
la fourniture d'identifiants de programmes audio et vidéo respectifs (SCID) pour des composantes de programmes respectives ;
la fourniture de composantes de programmes audio et vidéo comprimées, la segmentation de telles composantes en charges utiles et la formation de paquets de composantes respectifs comportant une charge utile et un identifiant correspondant (SCID) ;
la formation d'une base de données comportant des informations de programmes pour une période étendue de jours, ladite base de données comportant des noms de programmes, des identifiants de composantes (SCID), des heures de programmes et des informations de canaux ;
la segmentation d'au moins une partie des informations dans ladite base de données en ledit guide spécial d'informations de programmes et la formation desdits segments dudit guide spécial en paquets d'informations de programmes de guide spécial avec un identifiant associé (SCID) ;
la formation d'une table d'informations identifiant lesdits paquets de guide spécial et les identifiants associés (SCID) ;
la formation d'un guide principal comportant ladite table et une partie des informations de programmation incluses dans ledit guide spécial et la division dudit guide principal en charges utiles ;
la formation des charges utiles de guide principal en paquets comportant des identifiants de guide principal (SCID) ;
la fourniture d'une pluralité de canaux de transmission ;
le multiplexage dans le temps de paquets dudit guide principal, de paquets de programmes audio et vidéo respectifs et de paquets dudit guide spécial pour leur transmission sur ladite pluralité de canaux de transmission si bien que ledit guide principal soit reproduit sur une majorité de ladite pluralité de canaux de transmission et des segments respectifs dudit guide spécial sont appliqués à des canaux différents de ladite pluralité des canaux de transmission.

4. Appareil pour exécuter la méthode de la revendication 1, caractérisé par :
une pluralité de canaux de transmission ;
une pluralité de générateurs de programmes A/V par paquets ;
un ordonnanceur pour générer une liste desdits programmes A.V par paquets comportant des informations se rapportant aux heures de transmission, des identifiants de programmes, et diverses informations liées aux programmes A/V par paquets respectifs ;
ledit ordonnanceur étant programmé pour générer un signal par paquets de guide principal contenant une partie de données provenant de ladite liste concernant une période de visualisation en cours de plusieurs heures, et pour générer un signal par paquets de guide spécial contenant une plus grande partie de données provenant de ladite liste concernant une période de visualisation d'au moins plusieurs jours ;
et un moyen de multiplexage pour multiplexer ledit signal par paquets de guide principal avec lesdits programmes A/V par paquets respectifs sur substantiellement chaque canal, et pour multiplexer ledit guide spécial avec des programmes A/V sur seulement un desdits canaux.

5. Appareil pour exécuter la méthode de la revendication 2, caractérisé par :
une pluralité de canaux de transmission ;
une pluralité de générateurs de programmes A/V par paquets ;
un ordonnanceur pour générer une liste desdits programmes A/V par paquets comportant des informations se rapportant aux heures de transmission, des identifiants de programmes, et diverses informations liées aux programmes A/V par paquets respectifs ;
ledit ordonnanceur étant programmé pour générer un signal par paquets de guide principal contenant une partie de données provenant de ladite liste concernant une période de visualisation en cours de plusieurs heures, et pour générer un signal par paquets de guide spécial contenant une plus grande partie de données provenant de ladite liste concernant une période de visualisation d'au moins plusieurs jours ; ledit ordonnanceur génère ledit guide spécial en segments de données exclusives, chaque segment comprenant un signal par paquets ; et
un moyen de multiplexage pour multiplexer ledit signal par paquets de guide principal avec lesdits programmes A/V par paquets respectifs sur substantiellement chaque canal, et pour multiplexer des signaux par paquets de segments respectifs dudit guide spécial sur des canaux différents de ladite pluralité de canaux.

6. Appareil selon la revendication 5, caractérisé en ce que ledit ordonnanceur est en outre programmé pour inclure des informations reliant lesdits signaux par paquets de segments respectifs dudit guide spécial dans ledit signal par paquets de guide principal.

7. Appareil pour recevoir des signaux par paquets audio/vidéo (A/V) comprimés multiplexés dans le temps avec des informations de guide de programmes, lesdits signaux A/V étant transmis dans un format par paquets avec des composantes A/V respectives identifiées par des identifiants respectifs (SCID), lesdites informations de programmes étant transmises dans un signal par paquets de guide principal, comportant des informations de visualisation limitées se rapportant à une période de visualisation de plusieurs heures et aussi transmises dans un signal par paquets de guide spécial comportant des informations se rapportant à une période de visualisation d'au moins plusieurs jours, ledit appareil étant caractérisé par :
un détecteur (6,7) pour détecter la transmission desdits signaux par paquets A/V avec des informations de guide de programmes multiplexées dans le temps ;
un processeur de transport (8) couplé audit détecteur pour sélectionner des paquets de signal de signaux par paquets A/V désirés, signaux par paquets de guide principal et signaux par paquets de guide spécial, ledit processeur de transport séparant les informations de charge utile des paquets respectifs ;
un décompresseur de signal vidéo (22), couplé audit processeur de transport, pour décompresser les composantes de signaux vidéo de programmes A/V, ledit décompresseur de signal vidéo comportant un moyen de mémoire (30) destiné à être utilisé dans la décompression d'un signal vidéo comprimé, une interface de mémoire (32, 33) pour écrire des charges utiles de vidéo comprimée dans ledit moyen de mémoire, et une interface de microprocesseur (39) pour communiquer les données audit décompresseur et pour accéder aux données dans ledit moyen de mémoire ;
un microprocesseur (17) pour conditionner ledit processeur de transport à sélectionner des paquets de signaux de programmes A/V envoyés audit décompresser de signaux vidéo pour leur décompression, et où ledit microprocesseur répond à une commande d'utilisateur pour conditionner ledit processeur de transport à sélectionner les paquets de signaux de guide de programmes et conditionner ledit décompresseur vidéo à écrire les charges utiles des paquets de signaux de guide de programmes dans ledit moyen de mémoire comme vidéo comprimée.

8. Appareil selon la revendication 7, caractérisé en ce que ledit appareil comporte en outre :
un moyen d'affichage sur écran ; et
ledit microprocesseur, en réponse à la commande d'utilisateur, balaye au moins une partie des informations de guide de programmes stockées dans ledit moyen de mémoire et conditionne ledit appareil d'affichage sur écran à afficher les informations de guide spécial balayées.

9. Appareil selon la revendication 7, caractérisé en ce que ledit signal par paquets de guide spécial est transmis en segments, chaque segment étant un signal par paquets, des paquets de segments différents étant identifiés par un identifiant différent (SCID) et des segments différents étant transmis sur des canaux différents, et où ledit signal de guide principal comporte des informations identifiant lesdits, et se rapportant auxdits, segments respectifs, pour leur application audit moyen de mémoire.

10. Appareil selon la revendication 7, caractérisé en ce que ledit microprocesseur est programmé pour conditionner ledit décompresseur de signal vidéo à répondre à des adresses mémoire de microprocesseur quand ledit moyen de mémoire stocke des informations de guide spécial.

11. Appareil selon la revendication 10, caractérisé en ce que ledit décompresseur de signal vidéo comporte :
un générateur d'adresses, répondant à des pointeurs pour générer des adresses destinées à être appliquées audit moyen de mémoire ;
un moyen couplé entre ladite interface de microprocesseur et ledit générateur d'adresses pour coupler les pointeurs fournis par ledit microprocesseur audit générateur d'adresses.

12. Appareil selon la revendication 7, caractérisé en outre par :
un tampon de débit ; et
dans lequel ledit processeur de transport applique les charges utiles des paquets de transport audit tampon de débit, et les charges utiles des paquets de transport sont couplées depuis ledit tampon de débit jusqu'audit décompresseur de signal vidéo.

13. Appareil selon la revendication 12, caractérisé en ce que lesdites charges utiles de guide de programmes principal sont stockées et sollicitées par ledit microprocesseur dans ledit tampon de débit, et seules lesdites charges utiles de guide de programmes spécial sont appliquées audit moyen de mémoire.

14. Méthode d'exploitation d'un appareil récepteur pour recevoir un signal comportant au moins des données vidéo comprimées, et des données de guide de programmes transmises comme guide principal contenant des informations de programmation pour une période en cours de plusieurs heures et un guide spécial contenant des informations pour une période d'au moins plusieurs jours, ledit récepteur comportant un contrôleur de microprocesseur, et une mémoire tampon de débit, un décompresseur vidéo, et une mémoire de décompresseur associée, ladite méthode étant caractérisée par :
la détection d'un signal transmis comportant au moins des données vidéo comprimées, et des données de guide de programmes ;
la sélection à partir dudit signal dudit guide principal et l'application dudit guide principal à ladite mémoire tampon de débit en vue de son stockage et de sa sollicitation par ledit contrôleur de microprocesseur ;
le balayage dudit guide principal stocké dans ladite mémoire tampon de débit avec ledit contrôleur de microprocesseur pour déterminer des paramètres dudit guide spécial en vue de permettre la sélection dudit guide spécial à partir dudit signal ;
la sélection dudit guide spécial et le stockage dudit guide spécial dans ladite mémoire de décompresseur ;
le balayage dudit guide spécial stocké dans ladite mémoire de décompresseur avec ledit contrôleur de microprocesseur pour déterminer des informations de visualisation de programmes futurs.
